# EUROPEAN PATENT APPLICATION

(11) **EP 3 885 460 A1**
(43) Date of publication of application: **29.09.2021**
(21) Application number: 19901488.7
(22) Date of filing: 27.12.2019
(51) Int. Cl.: C22C 38/00, C21D 1/00, C21D 8/00

(54) **GRADIENT STEEL MATERIAL HAVING HIGH-PLASTICITY SURFACE LAYER AND HIGH-STRENGTH INNER LAYER, AND MANUFACTURING METHOD**

(30) Priority: 28.12.2018 CN 201811623001
(71) Applicant: BAOSHAN IRON & STEEL CO., LTD., Shanghai 201900 (CN)
(72) Inventor: ZHANG, Suoquan, Shanghai 201900 (CN); JIAO, Sihai, Shanghai 201900 (CN); DING, Jianhua, Shanghai 201900 (CN); WU, Kougen, Shanghai 201900 (CN)
(74) Representative: Santarelli
(86) International application number: PCT/CN2019/129094
(87) International publication number: WO 2020/135690

(57) **Abstract**

Provided are a gradient steel material with a high plastic surface layer and a high strength inner layer, and a manufacturing method are provided. Weight percentages of the components of the gradient steel material are: C≤0.15%, Si≤1%, Mn≤1.5%, and the balance of Fe and inevitable impurities, the surface layer of the steel material being ferrite, and the inner layer being ferrite+bainite. The manufacturing method therefor comprises: smelting, casting, rolling, and a heat treatment, wherein in the heat treatment step, a steel material is heated to an austenite temperature Ac3 or more and kept at said temperature for more than 3 min; thereafter, the material is cooled to a temperature range between Ar3 and Ar1 in a two-phase zone at a cooling rate of less than 0.5°C/s, and is then cooled to room temperature at a cooling rate of greater than 5°C/s. The present steel material does not need to be obtained by means of the compound preparation of different materials as only a single material is processed. At the same time, the composition of the steel material is simple. Although the internal and external microstructures are different, the difference is a gradual process, and the strength at the interface is good.

## Description

### TECHNICAL FIELD

The present invention relates to a steel material, in particular to a gradient steel material having a high-plasticity surface layer and a high-strength inner layer, and a manufacturing method.

### BACKGROUND

The strength and plasticity of steel materials are often two contradictory property indicators. It is often difficult to obtain satisfactory plasticity while pursuing strength. For some materials used for twisting or bending, the maximum deformation occurs on the surface layers of the materials. As the distance from the surface to the core becomes more and more distant, the strain becomes smaller and smaller, and the plasticity requirement is getting lower and lower. Therefore, if a material having a surface layer with high plasticity but slightly low strength and an inner layer with slightly low plasticity but high strength can be developed, it will be very helpful to solve the problem. While the surface material meets the large deformation of the surface layer, the inner material provides high strength. In this context, it is of great significance to develop a gradient steel material with different surface layer and inner layer.

The existing solutions are mainly to achieve the compounding of different materials through methods such as rolling cladding, explosive compounding and bonding compounding. There are many patents in this area, more than 1000. For example, the rolled clad plate produced by Baosteel as a leader is a clad plate product with both properties such as corrosion resistance of the stainless steel, nickel-based alloys and titanium steel of the surface layer and high strength of matrix materials, which is obtained by compounding functional materials such as stainless steel, nickel-based alloys and titanium steel with structural materials such as carbon steel through a method of rolling after assembly, thereby achieving further upgrades in material functions. Chinese patents such as CN201110045798.8, CN201310211969.9, CN201410707715.0, CN201310212003.7, CN201310213371.3, CN201510173144.1, CN201611223874.9, CN201510621011.6 and CN201510173145.6 introduce such compound rolling related technologies. In addition, explosive compounding has also been used in some applications. According to this technology, explosives are evenly distributed on surface metal and detonated to compound the surface metal and the base metal. Chinese patents CN201520878950.4, CN201510738639.4, CN201620972383.3, etc. introduce this type of related technologies. There are also many patents where metals or non-metals are bonded together through bonding methods to obtain clad plates meeting functional requirements, such as Chinese patents CN201720527381.8, CN201810506236.0 and CN201711015280.3. Combining the methods disclosed in the above documents, currently, two or more pieces of different materials are combined together mainly through different metallurgical or mechanical compound methods to have different microstructures and special functions.

In order to develop novel heat-resistant materials that can withstand large temperature differences, Japanese scholars Masayuki Niino et al. first proposed the concept of a gradient material. The gradient material is a novel composite material, and compared with traditional composite materials, the gradient material has the characteristic of continuous changes of microstructure and mechanical properties and has no obvious interface, which can effectively alleviate and eliminate material failure due to thermal stress damage at the interface. Northeastern University conducted unidirectional cooling on steel plates through controlled cooling, which results in a gradient change of the steel microstructure, a microstructure with high strength, high hardness and high wear resistance, such as martensite and bainite, is distributed on the surface; and a microstructure with high toughness and good plasticity, such as ferrite and pearlite, is distributed inside the material. For the material of which the microstructures are in gradient distribution and the microstructures on two sides have respective property advantages, the side with high strength and high hardness can meet the demand for strength and wear resistance; and the side with high toughness and good plasticity can meet the demand for toughness and machining deformation.

Large deformation technologies can also effectively refine the microstructures and achieve gradient changes in material microstructures or properties. At present, the most widely used large deformation technologies include equal channel angle pressing (ECAP), ultrasonic shot peening (USP), surface mechanical attrition treatment (SMAT), high pressure torsion (HPT), and so on. All the above studies achieve the gradient changes in the mechanical properties and microstructures on material surfaces by refining the microstructures with the large deformation technologies.

### SUMMARY

The present invention aims to provide a gradient steel material having a high-plasticity surface layer and a high-strength inner layer, and a manufacturing method, the steel material does not need to be obtained by means of the compound preparation of different materials as only a single material is processed, and at the same time, the components of the steel material is simple; the steel material of the present invention is a continuous material, although the internal and external microstructures are different, the difference is a gradual process, and the metallurgical strength at the interface is good; and meanwhile, the whole material has a low carbon content, which ensures good welding property.

In order to achieve the above objective, the technical solution of the present invention is:
a gradient steel material having a high-plasticity surface layer and a high-strength inner layer comprises the following components in percentage by weight: 0<C≤ 0.15%, 0<Si≤1%, 0<Mn≤1.5%, and the balance of Fe and inevitable impurities, the surface layer of the steel material being ferrite, and the inner layer being ferrite+bainite. Wherein, the surface layer thickness varies according to the thickness of a steel plate, and is usually within 1 mm.

Preferably, the surface layer of the steel material is ferrite, with a low carbon content not higher than 0.02 wt%, where 0.02 wt% is the result of keeping two decimal places, that is, it covers a range of values from 0.015 wt% to 0.024 wt%, preferably, the carbon content of the surface layer is not higher than 0.022 wt%; and the carbon content of the inner layer is relatively high, and is higher than the average carbon content of the whole gradient steel material, that is, the carbon content of the surface layer of the steel material is lower than the carbon content of the inner layer of the steel material.

The manufacturing method for a gradient steel material having a high-plasticity surface layer and a high-strength inner layer comprises: smelting, casting, rolling and a heat treatment; wherein in the heat treatment step, a steel material is heated to an austenitizing temperature Ac3 or more and hold at above temperature for more than 3 min to ensure complete austenitization of the material; thereafter, the material is cooled to a temperature range between Ar3 and Ar1 in a two-phase zone at a cooling rate of less than 0.5°C/s, and then rapidly cooled to room temperature at a cooling rate of greater than 5°C/s.

According to the manufacturing method of the present invention, during the heat treatment, the whole steel material is heated for complete austenitization, and then slowly cooled, so that the surface layer of the material preferentially obtains the ferrite. Since the solid solubility of carbon in the ferrite is relatively lower, the new ferrite releases carbon into the internal austenite, and thus the internal austenite tends to be more stable. As the ferrite further nucleates and grows up, the surface ferrite layer becomes thicker and thicker, the carbon content in the inner austenite becomes higher and higher, and the microstructure becomes more and more stable. In the subsequent rapid cooling process, the internal austenite transforms into a rapidly cooled microstructure with high strength, such as a mixed microstructure of bainite and ferrite.

Compared with clad plates obtained through rolling cladding, explosive compounding and bonding compounding, only one material is rolled and subjected to heat treatment in the present invention, and there is no need to subject two materials to assembly and other treatments. At the same time, in the final product, the steel material is an continuous material. Although the internal and external microstructures are different, the difference is a gradual process, and the metallurgical strength at the interface is good.

In the prior art, a steel plate is subjected to unidirectional cooling through controlled cooling to achieve a gradient change in the steel microstructure, a microstructure with high strength, high hardness and high wear resistance, such as a martensite or bainite microstructure, is distributed on the surface; and a microstructure with high toughness and good plasticity, such as a ferrite or pearlite microstructures, is distributed in the inner position, since the surface of the material cools quickly and the inner layer cools slowly during the cooling process. However, the microstructure desired by the present invention is just the opposite, a microstructure with high toughness and good plasticity is distributed on the surface of the material, and a microstructure with high strength, high hardness and high wear resistance is distributed inside the material. Therefore, the present invention adopts different cooling rates in different temperature ranges, so that the surface layer of the material undergoes phase change first, while the inner layer does not undergo phase change temporarily, and finally a ferrite microstructure with good plasticity on the surface layer and a bainite and ferrite with high strength on the inner layer are obtained. The microstructures are conducive to processing methods for large surface deformation such as bending and torsion. Meanwhile, in the present invention, since carbon in the surface layer microstructure transfers to the inner layer microstructure through ultra-long range diffusion, internal carbon is increased and the strength is increased, but the overall carbon content of the material is not high, and good welding property is maintained.

At the same time, the present invention does not need to refine the microstructure through the large deformation technology, the gradient changes in the mechanical properties and the microstructures are achieved on the surface of the material, and the manufacturing method is simple.

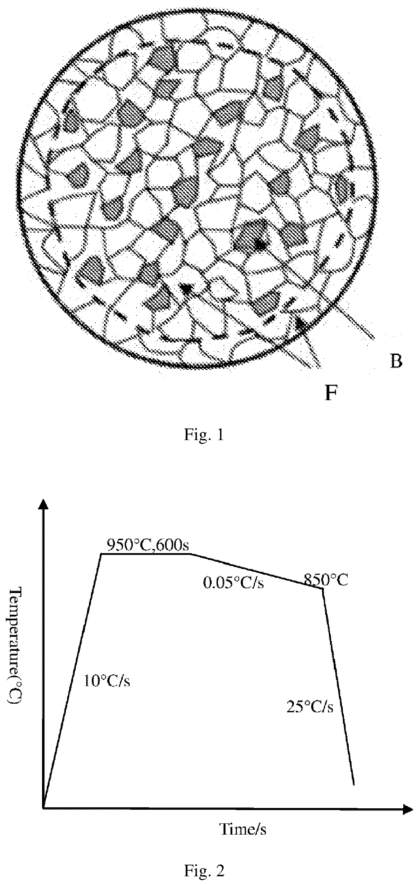

The material obtained by the method of the present invention is as shown in Fig. 1: the outer layer microstructure of the material is ferrite, as shown by the part outside the dashed circle in Fig. 1, and the inner layer microstructure is a mixed microstructures of ferrite and bainite, as shown by the part inside the dashed circle in Fig. 1.

The beneficial effects of the present invention are as follows:
The gradient steel material having the high-plasticity surface layer and the high-strength inner layer in the present invention, a ferrite layer with good plasticity on the surface layer and a mixed microstructure of ferrite and bainite with high strength in the inner layer can be obtained, and compared with the prior art, the steel material has the following advantages:
(1) There is no need to compound two materials, and only a single material is processed and prepared.
(2) The method of the present invention is short in process flow, simple in procedure and low in cost.
(3) The steel plate of the present invention is an continuous material, the difference of the microstructures on the two sides is a gradual process, and the metallurgical strength at the interface is good.
(4) In the present invention, since carbon in the surface layer transfers to the inner layer through ultra-long range diffusion, internal carbon is increased and the strength is increased, but the overall carbon content of the material is not high, and good welding property is maintained.

### BRIEF DESCRIPTION OF THE DRAWINGS

Fig. 1 is a schematic diagram of microstructure of a gradient steel material of the present invention, wherein B represents bainite, and F represents ferrite;
Fig. 2 is a schematic diagram of a heat treatment process in examples of a manufacturing method of the present invention;
Fig. 3 is a microstructure diagram of an end of a sample in Example 1 of the present invention; and
Fig. 4 is a microstructure diagram of an end of a sample in Example 4 of the present invention.

### DETAILED DESCRIPTION

The present invention will be further illustrated below in conjunction with embodiments and accompanying drawings.

The components in the examples and the comparative examples of the present invention are shown in Table 1, and the balance of Fe and unavoidable impurities. The manufacturing method for a steel material is as follows: the steel material obtained through converter or electric furnace smelting, heating and rolling is then heat-treated to finally obtain a gradient steel material having a surface layer with ferrite and an inner layer with ferrite+bainite .

The comparative examples of the application intend to illustrate that when the content of C, Si and Mn is not within the range of 0<C≤0.15%, 0<Si≤1%, 0<Mn≤1.5% as defined in the application, or the cooling rate does not meet the definition of the application, the microstructure of the gradient steel material having the surface layer with ferrite and the inner layer with ferrite+ bainite cannot be obtained.

Table 2 shows the heat treatment process in the examples of the manufacturing method of the present invention and the comparative examples.

Fig. 1 shows the microstructure of the gradient steel material of the present invention, the surface layer is ferrite, and the inner layer is a mixed microstructures of ferrite and bainite.

Fig. 2 shows a heat treatment process in examples of a manufacturing method of the present invention.

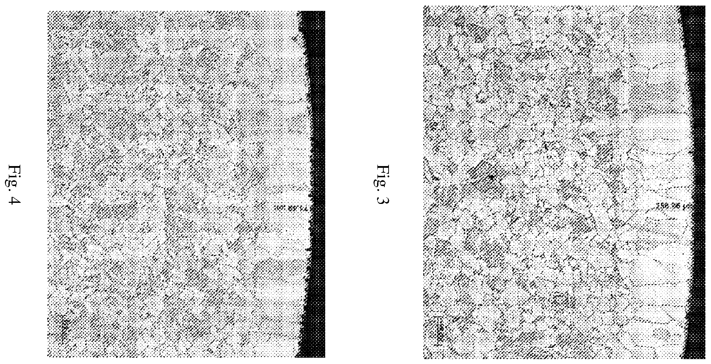

It can be found from Fig. 3 that in the microstructures of the gradient steel material obtained in Example 1, the surface layer is pure ferrite within a range of about 256 µm, and the inner layer is a mixed microstructures of ferrite and bainite.

Fig. 4 shows the microstructures of the gradient steel material obtained in Example 4, the surface layer is pure ferrite within a range of about 171 µm, and the inner layer is a mixed microstructures of ferrite and bainite.

**Table 1 Unit: weight percentage**

| | C | Si | Mn |
|---|---|---|---|
| Example 1 | 0.054 | 0.26 | 0.51 |
| Example 2 | 0.075 | 0.252 | 0.49 |
| Example 3 | 0.081 | 0.243 | 1.23 |
| Example 4 | 0.105 | 0.356 | 0.56 |
| Example 5 | 0.112 | 0.366 | 0.76 |
| Comparative Example 1 | 0.054 | 0.26 | 0.51 |
| Comparative Example 2 | 0.15 | 1.5 | 0.48 |

**Table 2**

| | Heating tempera ture | Hold ing time | Slow cooling speed | Slow cooling final temperature | Rapid cooling speed | Surface layer microstruct ure | Inner layer microstruct ure |
|---|---|---|---|---|---|---|---|
| Example 1 | 950°C | 300s | 0.05°C /s | 850°C | 25°C/s | ferrite | ferrite +bainite |
| Example 2 | 950°C | 600s | 0.1°C/s | 850°C | 30°C/s | ferrite | ferrite +bainite |
| Example3 | 1000°C | 300s | 0.05°C /s | 850°C | 25°C/s | ferrite | ferrite +bainite |
| Example 4 | 1000°C | 600s | 0.05°C /s | 860°C | 30°C/s | ferrite | ferrite +bainite |
| Example 5 | 1000°C | 900s | 0.1°C/s | 860°C | 40°C/s | ferrite | ferrite +bainite |
| Comparative Example 1 | 1000°C | 900s | 0.5°C/s | 860°C | 30°C/s | ferrite +bainite | ferrite +bainite |
| Comparative Example 2 | 1000°C | 900s | 0.05°C /s | 860°C | 30°C/s | ferrite +bainite | ferrite +bainite |

## Claims

1. A gradient steel material having a high-plasticity surface layer and a high-strength inner layer, comprising the following components in percentage by weight: 0<C≤ 0.15%, 0<Si≤1%, 0<Mn≤1.5%, and the balance of Fe and inevitable impurities, the surface layer of the steel material being ferrite, and the inner layer being ferrite+bainite.

2. The gradient steel material having a high-plasticity surface layer and a high-strength inner layer according to claim 1, **characterized in that** the surface layer of the steel material is ferrite with a carbon content not higher than 0.02 wt%; and the carbon content of the surface layer of the steel material is lower than the carbon content of the inner layer of the steel material.

3. A manufacturing method for a gradient steel material having a high-plasticity surface layer and a high-strength inner layer according to claim 1 or 2, **characterized by** comprising: smelting, casting, rolling and a heat treatment; wherein in the heat treatment step, a steel material is heated to an austenite temperature Ac3 or more and hold at above temperature for more than 3 min to ensure complete austenitization of the material; thereafter, the material is cooled to a temperature range between Ar3 and Ar1 in a two-phase zone at a cooling rate of less than 0.5°C/s, and then rapidly cooled to room temperature at a cooling rate of greater than 5°C/s.
